# EUROPEAN PATENT APPLICATION

(11) **EP 4 682 393 A1**
(43) Date of publication of application: **21.01.2026**
(21) Application number: 24189872.5
(22) Date of filing: 19.07.2024
(51) Int. Cl.: F16D 48/06

(54) **A CONTROL SYSTEM AND METHOD FOR PRECISE DISENGAGEMENT OF A CLUTCH**

(71) Applicant: VOLVO TRUCK CORPORATION, 405 08 Göteborg (SE)
(72) Inventor: OLESEN, Oscar, 416 57 Göteborg (SE); HAMILTON, Andreas, 439 53 Åsa (SE); BLANCKENFIELL, Magnus, 425 42 Göteborg (SE); LILLSKOG, Simon, 417 22 Göteborg (SE)
(74) Representative: Zacco Sweden AB

(57) **Abstract**

A clutch control system for precise clutch disengagement, wherein the disengagement of the clutch is preceded by a deliberate reduction in engine torque, the clutch control system comprising: a friction clutch capable of transitioning between a fully open, a partially open, and a fully closed position; a control unit configured to: monitor the reduction in engine torque to continuously obtain a current engine torque, and determine an effectively closed position of the clutch, wherein the effectively closed position is a partially open position having a torque capacity equal to the current engine torque, thereby preventing clutch slip at the effectively closed position; and a clutch actuator configured to operate the friction clutch at the effectively closed position while the current engine torque is above zero, and disengage the friction clutch to a fully open position as the current engine torque approaches zero.

## Description

### TECHNICAL FIELD

The disclosure relates generally to clutch control systems. In particular aspects, the disclosure relates to a clutch control system and method for precise disengagement of a clutch. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Shifting gears in a vehicle involves a sequence of events: reducing torque, disengaging the clutch, adjusting shift-fork positions, re-engaging the clutch, and then increasing torque. In this sequence, accurate clutch disengagement is essential to avoid driveline oscillations, which is accomplished by disengaging the clutch at zero torque. Zero engine torque occurs briefly, lasting only a few milliseconds before the torque turns negative, making the timing of disengagement challenging. Current methods attempt to predict the exact moment when torque reaches zero to coordinate with the clutch opening time t_{d}. This prediction is based on estimating the moment of zero torque and then initiating clutch disengagement t_{d} seconds prior to this moment. While effective in many scenarios, this approach often misses the narrow window of a few milliseconds necessary for optimal disengagement.

Hence, there is a need for improved clutch disengagement that can more reliably disengage the clutch exactly at zero torque, thereby avoiding driveline oscillations and improving overall transmission performance.

### SUMMARY

According to a first aspect of the disclosure, a clutch control system for precise disengagement of a clutch is disclosed. The disengagement of the clutch is preceded by a deliberate reduction in engine torque, during which the engine torque transitions from a positive value to a negative value and where the clutch is configured to disengage at a point of zero engine torque. The clutch control system comprises a friction clutch capable of transitioning between a fully open, a partially open, and a fully closed position. The clutch control system also comprises a control unit configured to monitor the reduction in engine torque to continuously obtain a current engine torque, and determine an effectively closed position of the clutch, wherein the effectively closed position is a partially open position having a torque capacity equal to the current engine torque, thereby preventing clutch slip at the effectively closed position. The clutch control system also comprises a clutch actuator configured to operate the friction clutch at the effectively closed position while the current engine torque is above zero, with the effectively closed position dynamically adjusting to a more open position in response to the reduction in current engine torque, and disengage the friction clutch to a fully open position as the current engine torque approaches zero. The first aspect of the disclosure may seek to more reliably disengage the clutch exactly at zero torque. A technical benefit may include avoiding driveline oscillations and improving overall transmission performance.

Optionally in some examples, including in at least one preferred example, the effectively closed position incorporates a safety margin to ensure that the clutch does not slip. A technical benefit may include avoiding accidental clutch slips and reducing unnecessary wear on the friction clutch.

Optionally in some examples, including in at least one preferred example, disengaging the friction clutch to a fully open position is achieved by disengaging the clutch at a predetermined torque threshold. A technical benefit may include simplified implementation and faster gear shifts, as driveline oscillations may be negligible below the predetermined threshold.

Optionally in some examples, including in at least one preferred example, disengaging at a predetermined torque threshold comprises disengaging the friction clutch such that a fully open position is timed to coincide with the engine torque reaching zero. A technical benefit may include the ability to select a predetermined torque threshold based on the accuracy of estimates when engine torque approaches zero.

Optionally in some examples, including in at least one preferred example, the control unit is further configured to determine a set-point for clutch position by applying the current torque to a clutch torque transfer model, wherein the set-point corresponds to the effectively closed position, determine an actuation level required to open the clutch at a certain clutch speed by applying a torque fall rate to a clutch actuator model, obtain an actual position of the clutch, determine an error between the set-point and the actual position of the clutch, input the error to a feedback control system, wherein the feedback control system is configured to generate a feedback control signal, and combine the actuation level with the feedback control signal to obtain a control action for adjusting the position of the clutch; and wherein the clutch actuator is further configured to execute the control action to adjust position of the friction clutch. The feedback control system may be a, proportional-derivative, PD, controller or a proportional-integral-derivative, PID, controller. A technical benefit may include enhanced precision and reliability of the clutch control system.

Optionally in some examples, including in at least one preferred example, the control unit is configured to calibrate the clutch torque transfer model by comparing engine rotational speed and clutch rotational speed for various clutch positions and engine torques, thereby identifying effectively closed positions for various engine torques. A technical benefit may include adapting to changes in clutch characteristics, such as wear, ensuring consistent performance over time.

Optionally in some examples, including in at least one preferred example, the control unit is configured to calibrate the actuator model by measuring clutch speed during certain constant actuations. A technical benefit may include adapting to changes in clutch characteristics ensuring consistent performance over time.

According to a second aspect of the disclosure a vehicle is disclosed. The vehicle comprises vehicle sensors configured to provide vehicle data, wherein the vehicle data comprises current engine torque, and a clutch control system according to any of the examples provided herein. The second aspect of the disclosure may seek to more reliably disengage the clutch exactly at zero torque. A technical benefit may include avoiding driveline oscillations and improving overall transmission performance.

Optionally in some examples, including in at least one preferred example, the vehicle sensors comprise an engine speed sensor configured to measure engine rotational speed, a clutch speed sensor configured to measure clutch rotational speed, and a clutch position sensor configured to record clutch position, and thereby the vehicle data further comprises engine rotational speed, clutch rotational speed, and clutch position. A technical benefit may include adapting to changes in clutch characteristics ensuring consistent performance over time.

According to a third aspect of the disclosure, a method for precise disengagement of a friction clutch is disclosed. The disengagement of the clutch is preceded by a deliberate reduction in engine torque during which the engine torque transitions from a positive value to a negative value and where the clutch is configured to disengage at a point of zero engine torque. The method comprises monitoring the reduction in engine torque to continuously obtain a current engine torque. The method also comprises determining an effectively closed position of the clutch, wherein the effectively closed position is a partially open position having a torque capacity equal to the current engine torque, thereby preventing clutch slip at the effectively closed position. The method comprises operating the friction clutch at the effectively closed position while the current engine torque is above zero, with the effectively closed position dynamically adjusting to a more open position in response to the reduction in current engine torque. Lastly, the method comprises disengaging the friction clutch to a fully open position as the current engine torque approaches zero. The third aspect of the disclosure may seek to more reliably disengage the clutch exactly at zero torque. A technical benefit may include avoiding driveline oscillations and improving overall transmission performance.

Optionally in some examples, including in at least one preferred example, the effectively closed position incorporates a safety margin to ensure that the clutch does not slip. A technical benefit may include avoiding accidental clutch slips and reducing unnecessary wear on the friction clutch.

Optionally in some examples, including in at least one preferred example, disengaging the friction clutch to a fully open position is achieved by disengaging the clutch at a predetermined torque threshold. A technical benefit may include simplified implementation and faster gear shifts, as driveline oscillations may be negligible below the predetermined threshold.

Optionally in some examples, including in at least one preferred example, disengaging at a predetermined torque threshold comprises disengaging the friction clutch such that a fully open position is timed to coincide with the engine torque reaching zero. A technical benefit may include the ability to select a predetermined torque threshold based on the accuracy of estimates when engine torque approaches zero.

Optionally in some examples, including in at least one preferred example, the method further comprises determining a set-point for clutch position by applying the current torque to a clutch torque transfer model, wherein the set-point corresponds to the effectively closed position; obtaining an actual position of the clutch; determining an error between the set-point and the actual position of the clutch; inputting the error (eₚₒₛ) to a feedback control system, wherein the feedback control system is configured to generate a feedback control signal; combining the actuation level with the feedback control signal to obtain a control action for adjusting the position of the clutch; and executing the control action to adjust position of the friction clutch. The feedback control system may be a, proportional-derivative, PD, controller or a proportional-integral-derivative, PID, controller. A technical benefit may include enhanced precision and reliability of the clutch control system.

Optionally in some examples, including in at least one preferred example, the method further comprises calibrating the clutch torque transfer model by comparing engine rotational speed and clutch rotational speed for various clutch positions and engine torques, thereby identifying effectively closed positions for various engine torques. A technical benefit may include adapting to changes in clutch characteristics, such as wear, ensuring consistent performance over time.

Optionally in some examples, including in at least one preferred example, the method further comprises calibrating the actuator model by measuring clutch speed during certain constant actuations. A technical benefit may include adapting to changes in clutch characteristics ensuring consistent performance over time.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram of a vehicle that includes a clutch control system for precise disengagement of a clutch, according to an example.
FIG. 2A is a schematic diagram of a friction clutch in fully open position.
FIG. 2B is a schematic diagram of a friction clutch in an effectively closed position.
FIG. 2C is a schematic diagram of a friction clutch in a fully closed position.
FIG. 3 is a schematic diagram of a model-based feedforward and PD/PID controller configured for precise disengagement of a clutch, according to an example.
FIG. 4 is a flow chart of a method for precise disengagement of a clutch.
FIG. 5A schematically illustrates a control unit.
FIG. 5B shows an example of a computer program product.
FIG. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

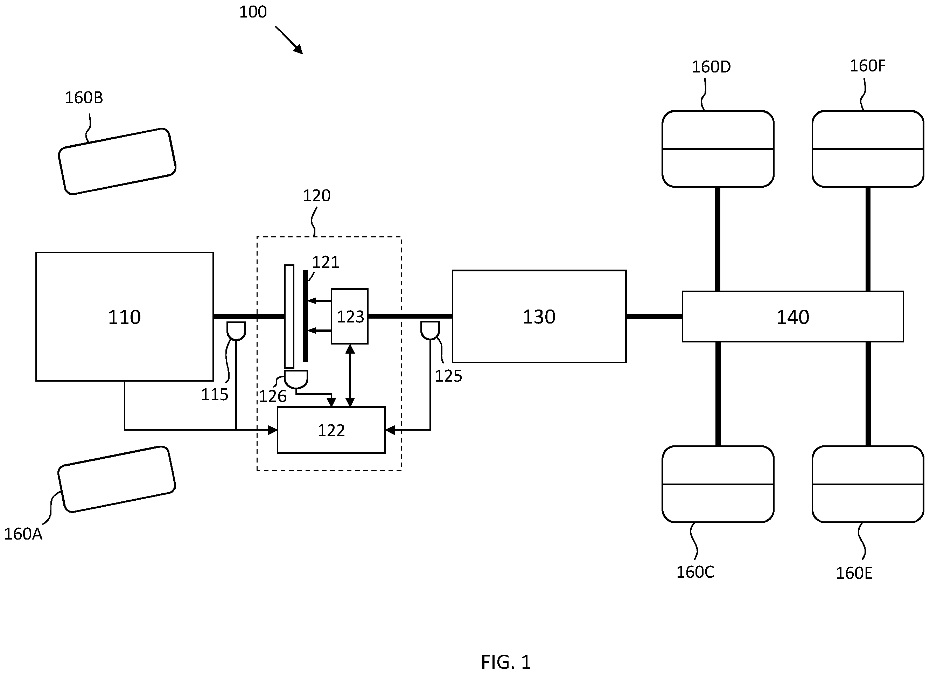

Fig. 1 illustrates a first aspect of the disclosure relating to a clutch control system 120 for precise clutch disengagement in a vehicle 100. An engine 110 or any other propulsion system is configured to generate mechanical power. A friction clutch 121 is operatively connected to the engine and designed to selectively engage and disengage the engine from the driveline. A transmission 130 is operatively connected to the friction clutch 121 and configured to modify the torque and speed of the power output from the engine, including multiple gear ratios for varying vehicle speed and torque requirements. A differential 140 is operatively connected to the transmission and configured to distribute power from the transmission to the driven wheels 160C, 160D, 160E, 160F while allowing the driven wheels to rotate at different speeds when the vehicle is turning. A first rear axle is operatively connected to the differential and designed to transmit power to a first set of driven wheels 160C, 160D, and a second rear axle is operatively connected to the differential and designed to transmit power to a second set of driven wheels 160E, 160F. In this example, a front axle is operatively connected to a set of non-driven wheels 160A, 160B.

The clutch control system 120 comprises the friction clutch 121, a clutch actuator 123 and an electronic control unit (ECU) 122. The friction clutch 121 is capable of transitioning between a fully open dₒ, a partially open, and a fully closed position d_{c}. The control unit 122 is configured to receive vehicle data, wherein the vehicle data comprises current engine torque or any other parameter indicative of current engine torque. For example, the current engine torque may be obtained via measurements from an engine speed sensor 115 and determined by the control unit 122. It is well known to those skilled in the art how to derive engine torque from rotational speed and/or acceleration measurements, and hence, rotational engine speed and/or acceleration measurements can be indicative of the current engine torque.

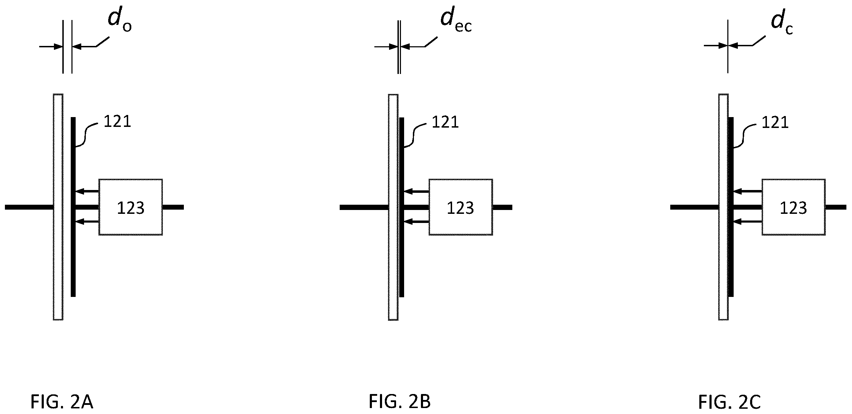

Figs. 2A-2C illustrate the friction clutch 121, controlled by the clutch actuator 123, in a fully open position dₒ, an effectively closed position d_{ec}, and a fully closed position d_{c}. The effectively closed position d_{ec} is a partially open position having a torque capacity that is greater than or equal to the current engine torque, thereby preventing clutch slip at the effectively closed position.

Table 1 provides an example of clutch torque capacity for various clutch positions, i.e., the torque required to cause clutch slip at these positions. The clutch torque capacity may change with wear of the friction clutch. Therefore, control unit 122 may continuously update the relationship between clutch position and clutch torque capacity. This may be achieved by using the engine speed sensor 115 and clutch speed sensor 125 to measure rotational speed before and after the friction clutch 121. By comparing RPMs before and after the friction clutch 121, clutch slip can be easily detected, allowing for an updated assessment of clutch torque capacity. A clutch torque transfer model may be obtained by comparing engine rotational speed and clutch rotational speed for various clutch positions and engine torques.

**Table 1** - Example of clutch torque capacity for various clutch positions.

| **Clutch position** | **Clutch torque capacity** |
|---|---|
| **2 mm (fully open)** | 0 Nm |
| **1 mm (fully open)** | 0 Nm |
| **0 mm (fully open)** | 0 Nm |
| **- 1 mm** | 500 Nm |
| **- 2 mm** | 1000 Nm |
| **- 3 mm** | 1500 Nm |
| **- 4 mm** | 2000 Nm |
| **- 5 mm** | 2500 Nm |
| **- 6 mm** | 3000 Nm |
| **- 7 mm** | 3500 Nm |
| **- 8 mm** | 3500 Nm |
| - **9 mm (closed)** | 3500 Nm |

A controlled disengagement of the clutch is preceded by a deliberate reduction in engine torque, during which the engine torque transitions from a positive value to a negative value and where the clutch is configured to disengage at a point of zero engine torque. The clutch control system 120 is therefore configured to monitor the reduction in engine torque to continuously obtain the current engine torque. The control unit 122 is further configured to determine an effectively closed position d_{ec} of the clutch, wherein the effectively closed position d_{ec} is a partially open position having a torque capacity equal to the current engine torque, thereby preventing clutch slip at the effectively closed position. The effectively closed position may also include a margin of safety, wherein the clutch position is more closed than actually needed. For example, the clutch control system may be configured to operate the friction clutch 121 at an effectively closed position that incorporates a safety margin -dₛₘ to ensure that the clutch 121 does not slip.

The clutch actuator 123 configured to operate the friction clutch 121 at the effectively closed position d_{ec} while the current engine torque is above zero. The effectively closed position d_{ec} will dynamically adjust to a more open position in response to the deliberate reduction in engine torque. The clutch actuator 123 is then configured to disengage the friction clutch 121 to a fully open position dₒ as the current engine torque approaches zero.

This may involve disengaging the friction clutch 121 to a fully open position dₒ at a predetermined torque threshold τ_{ο}. The disengaging of the friction clutch 121 may also be timed after reaching a predetermined torque threshold such that a fully open position dₒ coincides with the engine torque reaching zero. This can be achieved by using a clutch actuator model that predicts the time t_{d} it takes to move from the current clutch position to a fully open clutch position. The clutch actuator then starts disengagement at a time t_{d} prior to the moment torque is anticipated to reach 0 Nm. The clutch actuator model may be determined and periodically calibrated by measuring clutch speed during specific constant actuations. For example, the clutch actuator 123 may log position and time during specific constant actuations, or a clutch position sensor 126 clutch speed during specific constant actuations

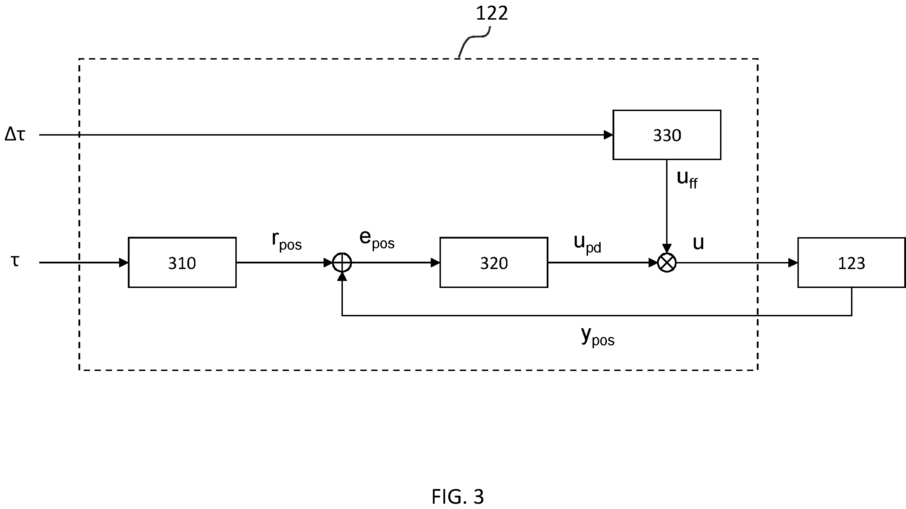

Fig. 3 illustrates an optional example of a clutch control system that is configured to adjust clutch position based on a feedforward and a feedback control system. In this example, the control unit 122 is configured to determine a set-point rₚₒₛ for clutch position by applying the current torque τ_{c} to a clutch torque transfer model 310. Here the set-point rₚₒₛ corresponds to the effectively closed position d_{ec}. The control unit 122 is also configured to determine an actuation level uff required to open the clutch at a certain clutch speed by applying a torque fall rate Δτ to a clutch actuator model 330, according to the example. Additionally, the control unit 122 in the example is configured to obtain an actual position of the clutch yₚₒₛ, which will typically be obtained from the clutch actuator 123 or a clutch position sensor 126, and determine an error eₚₒₛ between the set-point rₚₒₛ and the actual position yₚₒₛ of the clutch (i.e., eₚₒₛ = rₚₒₛ - yₚₒₛ). The control unit is configured to input the error eₚₒₛ to a feedback control system 320, which is configured to generate a feedback control signal u_{pd}. The feedback control system 320 may be a, proportional-derivative, PD, controller or a proportional-integral-derivative, PID, controller. Table 2 below provides an example of a PD controller, according to the example. Since a PD controller is a special case of a PID controller with the integral component set to zero, the example of the PD controller also serves as an example of a PID controller. The feedback control signal u_{pd} may be combined with the actuation level uff to obtain a control action u (i.e., u = u_{pd} · uff) for adjusting the position of the clutch. Lastly, in this example, the clutch actuator 123 is configured to execute the control action u to adjust position of the friction clutch 121.

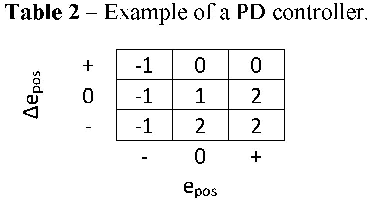

The control unit is configured to calibrate the clutch torque transfer model by comparing engine rotational speed and clutch rotational speed for various clutch positions and engine torques, thereby identifying effectively closed positions for various engine torques. The control unit is configured to calibrate the actuator model by measuring clutch speed during certain constant actuations.

Fig. 1 also illustrates a second aspect of the disclosure relating to a vehicle 100 comprising vehicle sensors configured to provide vehicle data and a clutch control system 120 according to any of the abovementioned examples. The vehicle sensors may comprise an engine speed sensor 115 or crankshaft sensor 115 configured to provide current engine torque or engine rotational speed and/or acceleration indicative of engine torque to the control unit 122. The vehicle sensors may further comprise a clutch speed sensor 125 configured to measure clutch rotational speed and a clutch position sensor 126 configured to record clutch positions. A vehicle equipped with the clutch control system 120, as described above, will be more effective at disengaging the clutch exactly at zero torque, thereby avoiding driveline oscillations and improving overall transmission performance.

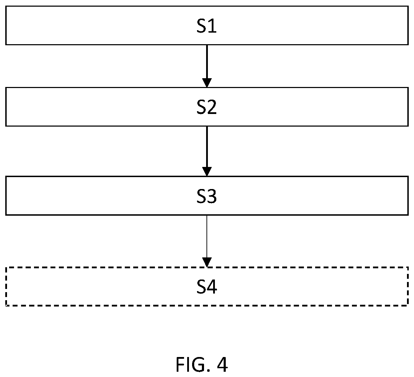

Fig. 4 illustrates a third aspect of the disclosure relating to a method for precise disengagement of a friction clutch 121. The method comprises monitoring S1 engine torque, determining S2 an effectively closed position d_{ec}, operating S3 the friction clutch, and disengaging S3 the friction clutch. It should be noted that any of the aforementioned aspects relating to the clutch control system 120 and the vehicle 100 are also applicable to the method.

The step of monitoring S1 comprises monitoring the reduction in engine torque to continuously obtain a current engine torque. The controlled disengagement of the clutch is preceded by a deliberate reduction in engine torque, during which the engine torque transitions from a positive value to a negative value and where the clutch is configured to disengage at a point of zero engine torque. The method therefore comprises monitoring S1 the reduction in engine torque to continuously obtain the current engine torque.

The step of determining S2 comprises determining an effectively closed position d_{ec} of the clutch, wherein the effectively closed position d_{ec} is a partially open position having a torque capacity equal to the current engine torque, thereby preventing clutch slip at the effectively closed position. The effectively closed position may also include a margin of safety, wherein the clutch position is more closed than actually needed. For example, the clutch control system may be configured to operate the friction clutch 121 at an effectively closed position that incorporates a safety margin (-dₛₘ) to ensure that the clutch 121 does not slip.

The step of operating S3 comprises operating the friction clutch 121 at the effectively closed position d_{ec} while the current engine torque is above zero. The effectively closed position d_{ec} will dynamically adjust to a more open position in response to the deliberate reduction in engine torque.

The step of disengaging S4 comprises disengaging the friction clutch 121 to a fully open position dₒ as the current engine torque approaches zero. This may involve disengaging the friction clutch 121 to a fully open position dₒ at a predetermined torque threshold τ_{ο}. In one example, this threshold τ_{ο} may be at 50 Nm. The disengaging of the friction clutch 121 may also be timed when reaching this threshold such that a fully open position dₒ coincides with the engine torque reaching zero. This can be achieved by using a clutch actuator model that predicts the time t_{d} it takes to move from the current clutch position to a fully open clutch position. The clutch actuator then starts disengagement at a time t_{d} prior to this moment. The clutch actuator model may be determined and periodically calibrated by measuring clutch rotational speed during specific constant actuations.

The method may further comprise determining a set-point rₚₒₛ for clutch position by applying the current torque τ_{c} to a clutch torque transfer model 310, wherein the set-point rₚₒₛ corresponds to the effectively closed position d_{ec}, determining an actuation level u_{ff} required to open the clutch at a certain clutch speed by applying a torque fall rate Δτ to a clutch actuator model 330, obtaining an actual position of the clutch yₚₒₛ, determining an error eₚₒₛ between the set-point rₚₒₛ and the actual position yₚₒₛ of the clutch, inputting the error eₚₒₛ to a feedback control system, wherein the feedback control system is configured to generate a feedback control signal u_{pd}, and combining the actuation level u_{ff} with the feedback control signal u_{pd} to obtain a control action u for adjusting the position of the clutch, and executing the control action u to adjust position of the friction clutch 121.

The method may further comprise calibrating the clutch torque transfer model by comparing engine rotational speed and clutch rotational speed for various clutch positions and engine torques, thereby identifying effectively closed positions for various engine torques. The method may further comprise calibrating the actuator model by measuring clutch speed during certain constant actuations.

In the following sections, additional aspects of the disclosure are described that may complement the first, second, and third aspects previously mentioned.

The new controller comprises a model-based feedforward controller and a PD controller, which together control the clutch based on the torque derivative. The model-based feedforward controller ensures that we can follow a ramp set position stably. The PD controller corrects for small errors and changes in conditions in the open-loop part. This design allows for continuous opening of the clutch during torque decline, minimizing shift times and ensuring that the clutch disengages close to 0 Nm torque, resulting in smoother shifts.

The goal of this controller is to continuously open the clutch during the engine torque ramp down. To achieve this, a new model-based controller has been created, utilizing two models: a clutch torque transfer model and a clutch actuator model.

The clutch torque transfer model describes how much torque the clutch can transfer at a certain position below the slip point. This is used to create a set point that depends on the current torque across the clutch plate. Since the clutch torque decreases during the engine torque ramp down, the set point also changes, allowing the system to follow this adjustment and ensure disengagement occurs when there is zero torque across the clutch.

The clutch actuator model describes the actuation (airflow for a pneumatic actuator) required to open the clutch at a specified speed. In this design, it enables the input of a torque fall rate to determine the necessary airflow to open the clutch, thereby allowing it to follow the set-point ramp created by the clutch torque transfer model.

This creates a feedforward controller that can control the clutch based on the clutch torque derivative. To enhance the robustness of this controller, a PD controller is also included, which modifies the open-loop output from the clutch actuator model. This PD controller outputs 1 when there is zero position control error and zero delta control error. When deviation from the set position occurs, the airflow is either increased or decreased based on the desired behavior. The control system is illustrated in Fig. 3, and an example of the PD controller, presented as a matrix, is shown in Table 2.

This results in a controller that controls a clutch in a non-linear fashion. The controller is also very stable along the set-point ramp, which is crucial for following the clutch torque transfer capability. If the clutch is opened too much, it will start to slip, creating oscillations in the driveline and discomfort for the driver.

The clutch system exhibits variability in characteristics such as the torque transfer curve and clutch speed for each individual clutch. This necessitates a learning function to adjust for these parameters. For clutch speed, each shift is evaluated by measuring the speed at certain constant actuations. This speed is compared with the expected speed to determine how much an individual clutch deviates from the nominal clutch. Thereafter, small adjustments are made to the clutch actuator model with each shift throughout the clutch's lifetime to maintain optimal performance.

Additionally, this method of opening the clutch can be used when there is negative torque over the clutch, effectively utilizing the engine's auxiliary brake. This approach enhances comfort and reduces oscillations during braking. The reduction of oscillations when using the engine auxiliary brake also decreases shift-time, thus enhancing the braking effect.

Another application of the clutch torque models under negative torque from the engine auxiliary brake involves slowly opening the clutch without exceeding the torque transfer limit. From this point, monitoring of the clutch torque allows for the clutch to be opened only once a decrease in torque is observed. This approach yields results similar to those of disengagement.

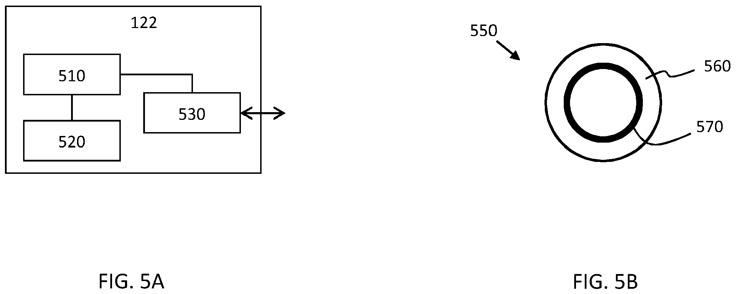

FIG. 5A schematically illustrates, in terms of a number of functional units, the components of a control unit 122 according to aspects of the discussions and methods disclosed herein. This control unit 122 may typically be comprised in the vehicle 100. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA.

Particularly, the processing circuitry 510 is configured to cause the control unit 122 to perform a set of operations, or steps, such as the methods discussed in connection to FIG. 4. For example, the storage medium 520 may store the set of operations, and the processing circuitry 510 may be configured to retrieve the set of operations from the storage medium 520 to cause the control unit 122 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 122 may further comprise an interface 530 for communications with at least one external device, such as an engine, a friction clutch, a clutch actuator, vehicle sensors or a gearbox. As such the interface 530 may comprise one or more transmitters and receivers, comprising analogue and digital components and a suitable number of ports for wireline or wireless communication.

The processing circuitry 510 controls the general operation of the control unit 122, e.g., by sending data and control signals to the interface 430 and the storage medium 520, by receiving data and reports from the interface 430, and by retrieving data and instructions from the storage medium 520. Other components, as well as the related functionality, of the control node are omitted in order not to obscure the concepts presented herein.

FIG. 5B shows an example of a computer program product. A computer readable medium 560 carrying a computer program 570 comprising program code means for performing the steps of aforementioned method when said program product is run on a computer or on processing circuitry 510 of a control unit 122.

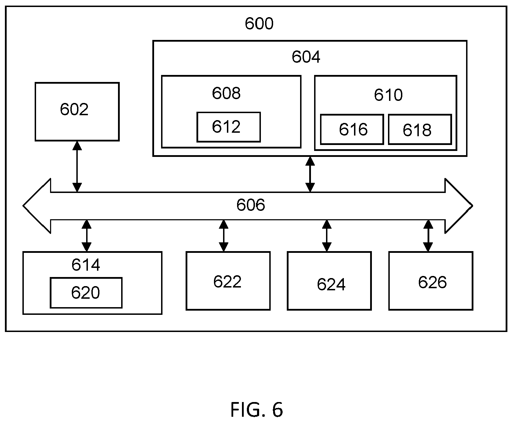

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A clutch control system 120 for precise clutch disengagement, wherein the disengagement of the clutch is preceded by a deliberate reduction in engine torque, during which the engine torque transitions from a positive value to a negative value and where the clutch is configured to disengage at a point of zero engine torque, the clutch control system 120 comprising: a friction clutch 121 capable of transitioning between a fully open dₒ, a partially open, and a fully closed position d_{c}; a control unit 122 configured to: monitor the reduction in engine torque to continuously obtain a current engine torque, and determine an effectively closed position d_{ec} of the clutch, wherein the effectively closed position d_{ec} is a partially open position having a torque capacity equal to the current engine torque, thereby preventing clutch slip at the effectively closed position; and a clutch actuator 123 configured to: operate the friction clutch 121 at the effectively closed position d_{ec} while the current engine torque is above zero, with the effectively closed position d_{ec} dynamically adjusting to a more open position in response to the reduction in current engine torque, and disengage the friction clutch 121 to a fully open position dₒ as the current engine torque approaches zero.

Example 2: The clutch control system 120 of example 1, wherein the effectively closed position d_{ec} incorporates a safety margin -dₛₘ to ensure that the clutch 121 does not slip.

Example 3: The clutch control system 120 of any of examples 1-2, wherein disengaging the friction clutch 121 to a fully open position dₒ is achieved by disengaging the clutch at a predetermined torque threshold τ_{ο}.

Example 4: The clutch control system 120 of example 3, wherein disengaging the friction clutch 121 such that a fully open position dₒ is timed to coincide with the engine torque reaching zero.

Example 5: The clutch control system 120 of any of examples 1-4, wherein the control unit 122 is further configured to: determine a set-point rₚₒₛ for clutch position by applying the current torque τ_{c} to a clutch torque transfer model, wherein the set-point rₚₒₛ corresponds to the effectively closed position d_{ec}, determine an actuation level uff required to open the clutch at a certain clutch speed by applying a torque fall rate Δτ to a clutch actuator model, obtain an actual position of the clutch yₚₒₛ, determine an error eₚₒₛ between the set-point rₚₒₛ and the actual position yₚₒₛ of the clutch, input the error eₚₒₛ to a feedback control system, wherein the feedback control system is configured to generate a feedback control signal u_{pd}, and combine S6 the actuation level u_{ff} with the feedback control signal u_{pd} to obtain a control action u for adjusting the position of the clutch, and wherein the clutch actuator 123 is further configured to execute the control action u to adjust position of the friction clutch 121.

Example 6: The clutch control system of example 5, wherein the feedback control system is a, proportional-derivative, PD, controller or a proportional-integral-derivative, PID, controller.

Example 7: The clutch control system of any of examples 1-6, wherein the control unit is configured to calibrate the clutch torque transfer model by comparing engine rotational speed and clutch rotational speed for various clutch positions and engine torques, thereby identifying effectively closed positions for various engine torques.

Example 9: A vehicle 100, comprising: vehicle sensors 115 configured to provide vehicle data, wherein the vehicle data comprises current engine torque, and a clutch control system 120 according to any of examples 1-6.

Example 10: The vehicle 100 of example 9, wherein vehicle sensors comprise an engine speed sensor 115 configured to measure engine rotational speed, a clutch speed sensor 125 configured to measure clutch rotational speed, and a clutch position sensor 126 configured to record clutch position, and whereby the vehicle data further comprises engine rotational speed, clutch rotational speed, and clutch position, and the vehicle comprises a clutch control system 120 according to any of examples 1-8.

Example 11: A method for precise disengagement of a friction clutch 121, wherein the disengagement of the clutch is preceded by a deliberate reduction in engine torque during which the engine torque transitions from a positive value to a negative value and where the clutch is configured to disengage at a point of zero engine torque, the method comprising: monitoring S1 the reduction in engine torque to continuously obtain a current engine torque, and determining S2 an effectively closed position d_{ec} of the clutch, wherein the effectively closed position d_{ec} is a partially open position having a torque capacity equal to the current engine torque, thereby preventing clutch slip at the effectively closed position; and operating S3 the friction clutch 121 at the effectively closed position d_{ec} while the current engine torque is above zero, with the effectively closed position d_{ec} dynamically adjusting to a more open position in response to the reduction in current engine torque, and disengaging S4 the friction clutch 121 to a fully open position dₒ as the current engine torque approaches zero.

Example 12: The method of example 11, wherein the effectively closed position d_{ec} incorporates a safety margin -dₛₘ to ensure that the clutch 121 does not slip.

Example 13: The method of any of examples 11-12, wherein disengaging S4 the friction clutch 121 to a fully open position dₒ is achieved by disengaging the clutch at a predetermined torque threshold τₒ.

Example 14: The method of example 13, wherein the disengaging is timed such that the fully open position dₒ coincides with the engine torque reaching zero.

Example 15: The method of any of examples 11-13, further comprising: determining a set-point rₚₒₛ for clutch position by applying the current torque τ_{c} to a clutch torque transfer model, wherein the set-point rₚₒₛ corresponds to the effectively closed position d_{ec}, determining an actuation level uff required to open the clutch at a certain clutch speed by applying a torque fall rate Δτ to a clutch actuator model, obtaining an actual position of the clutch yₚₒₛ, determining an error eₚₒₛ between the set-point rₚₒₛ and the actual position yₚₒₛ of the clutch, inputting the error eₚₒₛ to a feedback control system, wherein the feedback control system is configured to generate a feedback control signal u_{pd}, and combining the actuation level u_{ff} with the feedback control signal u_{pd} to obtain a control action u for adjusting the position of the clutch, and executing the control action u to adjust position of the friction clutch 121.

Example 16: The method of example 15, wherein the feedback control system is a, proportional-derivative, PD, controller or a proportional-integral-derivative, PID, controller.

Example 17: The method of any of examples 11-16, further comprising calibrating the clutch torque transfer model by comparing engine rotational speed and clutch rotational speed for various clutch positions and engine torques, thereby identifying effectively closed positions for various engine torques.

Example 18: The method of any of examples 14-16, further comprising calibrating the actuator model by measuring clutch speed during certain constant actuations.

Example 19: A computer program 650 comprising program code means for performing the steps of any of examples 11-18 when said program is run on a computer or on processing circuitry 610 of a control unit 122.

Example 20: A computer readable medium 660 carrying a computer program 670 comprising program code means for performing the steps of any of examples 11-18 when said program product is run on a computer or on processing circuitry 610 of a control unit 122.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A clutch control system (120) for precise disengagement of a clutch, wherein the disengagement of the clutch is preceded by a deliberate reduction in engine torque, during which the engine torque transitions from a positive value to a negative value and where the clutch is configured to disengage at a point of zero engine torque, the clutch control system (120) comprising:
a friction clutch (121) capable of transitioning between a fully open (dₒ), a partially open, and a fully closed position (d_{c});
a control unit (122) configured to monitor the reduction in engine torque to continuously obtain a current engine torque, and determine an effectively closed position (d_{ec}) of the clutch, wherein the effectively closed position (d_{ec}) is a partially open position having a torque capacity equal to the current engine torque, thereby preventing clutch slip at the effectively closed position; and
a clutch actuator (123) configured to operate the friction clutch (121) at the effectively closed position (d_{ec}) while the current engine torque is above zero, with the effectively closed position (d_{ec}) dynamically adjusting to a more open position in response to the reduction in current engine torque, and disengage the friction clutch (121) to a fully open position (dₒ) as the current engine torque approaches zero.

2. The clutch control system (120) of claim 1, wherein the effectively closed position (d_{ec}) incorporates a safety margin (-dₛₘ) to ensure that the clutch (121) does not slip.

3. The clutch control system (120) of any of claims 1-2, wherein disengaging the friction clutch (121) to a fully open position (dₒ) is achieved by disengaging the clutch at a predetermined torque threshold (τₒ).

4. The clutch control system (120) of claim 3, wherein disengaging comprises disengaging the friction clutch (121) such that a fully open position (dₒ) is timed to coincide with the engine torque reaching zero.

5. The clutch control system (120) of any of claims 1-4, wherein the control unit (122) is further configured to:
determine a set-point (rₚₒₛ) for clutch position by applying the current torque (τ_{c}) to a clutch torque transfer model, wherein the set-point (rₚₒₛ) corresponds to the effectively closed position (d_{ec}),
determine an actuation level (u_{ff}) required to open the clutch at a certain clutch speed by applying a torque fall rate (Δτ) to a clutch actuator model,
obtain an actual position of the clutch (yₚₒₛ),
determine an error (eₚₒₛ) between the set-point (rₚₒₛ) and the actual position (yₚₒₛ) of the clutch,
input the error (eₚₒₛ) to a feedback control system, wherein the feedback control system is configured to generate a feedback control signal (u_{pd}), and
combine the actuation level (u_{ff}) with the feedback control signal (u_{pd}) to obtain a control action (u) for adjusting the position of the clutch; and
wherein the clutch actuator (123) is further configured to:
execute the control action (u) to adjust position of the friction clutch (121).

6. The clutch control system of any of claims 1-5, wherein the control unit is configured to calibrate the clutch torque transfer model by comparing engine rotational speed and clutch rotational speed for various clutch positions and engine torques, thereby identifying effectively closed positions for various engine torques.

7. A vehicle (100), comprising vehicle sensors (115) configured to provide vehicle data, wherein the vehicle data comprises current engine torque, and a clutch control system (120) according to any of claims 1-5.

8. The vehicle (100) of claim 7, wherein vehicle sensors comprise an engine speed sensor (115) configured to measure engine rotational speed, a clutch speed sensor (125) configured to measure clutch rotational speed, and a clutch position sensor (126) configured to record clutch position, and whereby the vehicle data further comprises engine rotational speed, clutch rotational speed, and clutch position, and the vehicle comprises a clutch control system (120) according to any of claims 1-6.

9. A method for precise disengagement of a friction clutch (121), wherein the disengagement of the clutch is preceded by a deliberate reduction in engine torque during which the engine torque transitions from a positive value to a negative value and where the clutch is configured to disengage at a point of zero engine torque, the method comprising:
monitoring (S1) the reduction in engine torque to continuously obtain a current engine torque;
determining (S2) an effectively closed position (d_{ec}) of the clutch, wherein the effectively closed position (d_{ec}) is a partially open position having a torque capacity equal to the current engine torque, thereby preventing clutch slip at the effectively closed position;
operating (S3) the friction clutch (121) at the effectively closed position (d_{ec}) while the current engine torque is above zero, with the effectively closed position (d_{ec}) dynamically adjusting to a more open position in response to the reduction in current engine torque; and
disengaging(S4) the friction clutch (121) to a fully open position (do) as the current engine torque approaches zero.

10. The method of claim 9, wherein the effectively closed position (d_{ec}) incorporates a safety margin (-dₛₘ) to ensure that the clutch (121) does not slip.

11. The method of any of claims 9-10, wherein disengaging (S4) the friction clutch (121) to a fully open position (dₒ) is achieved by disengaging the clutch at a predetermined torque threshold (τ_{ο}).

12. The method of claim 11, wherein the disengaging is timed such that the fully open position (dₒ) coincides with the engine torque reaching zero.

13. The method of any of claims 9-12, further comprising:
determining a set-point (rₚₒₛ) for clutch position by applying the current torque (τ_{c}) to a clutch torque transfer model, wherein the set-point (rₚₒₛ) corresponds to the effectively closed position (d_{ec});
obtaining an actual position of the clutch (yₚₒₛ);
determining an error (eₚₒₛ) between the set-point (rₚₒₛ) and the actual position (yₚₒₛ) of the clutch;
inputting the error (eₚₒₛ) to a feedback control system, wherein the feedback control system is configured to generate a feedback control signal (u_{pd});
combining the actuation level (u_{ff}) with the feedback control signal (u_{pd}) to obtain a control action (u) for adjusting the position of the clutch; and
executing the control action (u) to adjust position of the friction clutch (121).

14. The method of any of claims 9-13, further comprising calibrating the clutch torque transfer model by comparing engine rotational speed and clutch rotational speed for various clutch positions and engine torques, thereby identifying effectively closed positions for various engine torques.

15. A computer readable medium (560) carrying a computer program (570) comprising program code means for performing the steps of any of claims 9-14 when said program product is run on a computer or on processing circuitry (510) of a control unit (130).
